Europäisches Patentamt

European Patent Office

Office européen des brevets

(11) Veröffentlichungsnummer: **0 660 547 A1**

# (12) EUROPÄISCHE PATENTANMELDUNG

(21) Anmeldenummer: **94119990.3**

(22) Anmeldetag: **16.12.94**

(51) Int. Cl.⁶: **H04B 10/06**

(30) Priorität: **22.12.93 DE 4343979**

(43) Veröffentlichungstag der Anmeldung:
**28.06.95 Patentblatt 95/26**

(84) Benannte Vertragsstaaten:
**DK ES FR GB IT NL**

(71) Anmelder: **BRÄHLER ICS Konferenztechnik
International Congress Service
Kapellenveg 15
D-53639 Königswinter (DE)**

(72) Erfinder: **Rumprecht, Manuel, c/o Brähler ICS
Berlin
Güntzelstrasse 19
D-10717 Berlin (DE)**

(74) Vertreter: **Turi, Michael, Dipl.-Phys. et al
Samson & Partner
Widenmayerstrasse 5
D-80538 München (DE)**

(54) **Infrarotstrahlungsempfänger und Verfahren zur Informationsübertragung.**

(57) Ein Infrarotstrahlungsempfänger (1), insbesondere eine IR-Eingangsschaltung (1), und ein Verfahren zur Informationsübertragung mittels wenigstens einer Infrarot-Empfangsdiode (D1, D2) zum Empfang von Infrarotsignalen minimieren über einen Schaltungszusatz (2) Störstrahlungseinflüsse bei der Informationsübertragung. Die Minimierung der Störstrahlungseinflüsse erfolgt bevorzugt durch Variation des Gleichstrom-Lastwiderstandes entsprechend dem durch die Störstrahlung bedingten Gleichspannungsabfall über einem Arbeitswiderstand (Ra).

FIG. 1

Die Erfindung betrifft einen Infrarotstrahlungsempfänger mit einer IR-Eingangsschaltung (1), die wenigstens eine Infrarot-Empfangsdiode zum Empfang von Infrarotsignalen zur Informationsübertragung, insbesondere von Ton und/oder Daten aufweist. Derartige Empfänger werden beispielsweise in der modernen Konferenztechnik zur drahtlosen Vielkanalübertragung von Sprachen eingesetzt. Die Erfindung betrifft ferner ein Verfahren zur Informationsübertragung nach dem Oberbegriff des Anspruches 12.

Seit den Anfängen der modernen Konferenztechnik besteht das Bedürfnis, auf möglichst unkomplizierte und dennoch qualitativ hochwertige Art und Weise Reden u.ä. in mehreren Sprachen gleichzeitig zu übertragen. Wegen des geringen apparativen Aufwandes und aufgrund der leichteren Installierbarkeit vor Ort war dabei eine gut funktionierende drahtlose Vielkanal-Übertragung mehrerer Sprachen stets ein wesentliches technisches Ziel.

Ein erster Erfolg beim Erreichen dieses Zieles wurde in den fünfziger Jahren durch eine drahtlose Vielkanal-Übertragung nach dem Induktionsprinzip (basierend auf einer Schleife und einem starken Sender) erreicht. Die Empfänger innerhalb der Schleife sind zum Empfang der magnetischen Signalkomponente ausgelegt. In der Praxis werden AM- oder FM-modulierte Induktionsanlagen im Längst- und Langwellenbereich bis 135 kHz eingesetzt.

Ein typisches Problem der Langwellenübertragung ist der geringe Übertragungsbereich von nur 3000 Hz, der einen dem Telefon oder Langwellenradio ähnlichen Klang bedingt, welcher den hohen Ansprüchen der modernen Konferenztechnik im Grunde nicht mehr genügt. Ein weiteres Problem besteht in einem unkontrollierten Empfang außerhalb der Schleife.

Aufgrund der vorstehend beschriebenen Probleme wurde deshalb intensiv nach einer Übertragungstechnik gesucht, die eine bessere Übertragungsqualität realisiert und deren Ausbreitungsbereich leichter kontrollierbar ist.

Etwa seit Mitte der siebziger Jahre kam die Tonübertragung im Infrarotstrahlungsbereich auf. Infrarotstrahlung bietet den Vorteil, i.w. den gesamten menschlichen Sprachbereich mit einem Umfang von 8000 Hz und mehr drahtlos übertragen zu können. Ein besonderer Vorteil des Einsatzes der Infrarotübertragungstechnik im Bereich der Konferenztechnik liegt in der im Vergleich zur Funkübertragung leichten Kontrollierbarkeit. Infrarotstrahlung bzw. -licht wird durch Wände, Vorhänge oder sogar Papier absorbiert. Die Daten- und Tonübertragung mit Infrarotstrahlung verdrängt die Induktionsübertragung im Konferenzbereich aufgrund ihrer besseren Qualität und Ihrer höheren Sicherheitsstruktur immer mehr.

Ein noch weitestgehend ungelöstes Problem der drahtlosen Infrarotübertragung sind allerdings die zahlreichen natürlichen und künstlichen Störquellen. So stört Kunstlicht nahe dem Infrarotspektrum (z.B. Glühlampen, Spots oder aber andere künstliche Beleuchtungsquellen) - vor allem aber Sonnenlicht als energiereichste Infrarotquelle überhaupt - die Infrarotübertragung.

Es wurde zwar versucht, mit Schwarzfiltern, welche Infrarotlicht, nicht aber sichtbares Licht durchlassen, einen Teil der Störungen auszufiltern - eine wirklich zufriedenstellende Lösung des Störungsproblemes bieten Schwarzfilter jedoch nicht. Wenn die Sonnenlichteinstrahlung zu stark wird, steigt der Rauschanteil im Empfänger S/N auf Werte unter 30dB. Derartige Trennspannungen gewährleisten keine zufriedenstellende Empfangsqualität mehr - anzustreben sind mindestens 40dB.

Gute Infrarotempfänger mit Schwarzlichtfiltern nach dem Stand der Technik arbeiten bis zu einer Kunst- und/oder Tageslichtstrahlung von bis zu 4000 lx zufriedenstellend. Eine derartige Strahlungsintensität entspricht üblichen Studiobedingungen, so daß bereits hier die Grenzen der Infrarotübertragung erreicht werden. Selbst unter Studiobedingungen müssen schon mehrere Infrarotstrahler aufgestellt werden, um die Störstrahlungseinflüsse durch eine genügend große "Nutzlichteinstrahlung" zumindest einigermaßen zu kompensieren. Ab einer Einstrahlung von ca. 4000 lx ist aber auch keine zufriedenstellende Kompensation mit mehreren Strahlern mehr möglich.

Die Erfindung zielt darauf ab, eine zufriedenstellende Empfangsqualität bei der Informationsübertragung im Infrarotbereich auch noch bei starker Störstrahlung (z.B. im Bereich um 4000 lx Intensität) zu gewährleisten.

Die Erfindung erreicht dieses Ziel durch den Gegenstand des Anspruches 1 sowie durch das in Anspruch 12 angegebene Verfahren.

Ein gattungsgemäßer Infrarotstrahlungsempfänger weist danach einen Schaltungszusatz zur Minimierung von Störstrahlungseinflüssen bei der Informationsübertragung auf. Anders als bei der rein optischen Schwarzfiltermethode wird erfindungsgemäß eine unkomplizierte elektronische Minimierung der Störstrahlungseinflüsse realisiert. Eine elektronische Störstrahlungsminimierung bietet insbesondere die Möglichkeit der Realisierung eines Schaltungszusatzes zur Minimierung von Störeinflüssen in Abhängigkeit der jeweiligen Außenlichtverhältnisse.

Bei einer besonders bevorzugten Ausführungsform der Erfindung ist der Schaltungszusatz zur Variation des Gleichstrom-Lastwiderstandes der wenigstens einen IR-Empfangsdiode in Abhängigkeit der Störstrahlungseinflüsse ausgelegt (bzw. der Schaltungszusatz ist derart ausgelegt, daß er entsprechend dem durch die Störstrahlung bedingten Gleichspannungsabfall über einem Arbeitswiderstand (Ra) den Gleichstrom-Lastwiderstand der IR-Empfangsdioden variiert (siehe dazu die Ansprüche 2, 3 und 13). Die Variation des Gleichstromlastwiderstandes ist gleichzusetzen mit der Aufrechterhaltung des Gleichspannungsarbeitspunktes, was eine Sperrspannungs-Aufrechterhaltung bedeutet. Dieser besonders vorteilhaften Variante der Erfindung liegt die Idee zu Grunde, den störenden Sonnen- oder Kunstlichteinfluß (der eine Art "Kurzschluß" des Lastwiderstandes Ra bewirkt - s.u.) durch eine Variation des Gleichstrom-Lastwiderstandes der Dioden zu kompensieren (Aufrechterhaltung des Gleichstromarbeitspunktes der Dioden D1 und D2). Mit dieser Ausführungsform ist es möglich, Infrarotempfänger statt bei 4000 lx unter bis zu 50000 lx Außenlichteinfluß zu betreiben. Die Variante des Anspruches 3 ermöglicht in besonders vorteilhafter Weise einen Einsatz von Infrarotempfängern auch unter schwierigsten (d.h. hellsten) Bedingungen. Selbst bei einer hellen Sonneneinstrahlung in Tagungsräumen ist es nicht mehr nötig, den Tagungsraum beispielsweise durch ein Zuziehen der Vorhänge zu verdunkeln. Auch ein Betrieb im Freien ist problemlos möglich.

Bei einer besonders bevorzugten Weiterbildung der Erfindung ist der Schaltungszusatz mehrstufig ausgelegt (Anspruch 4). Durch eine mehrstufige Auslegung ist eine Kompensation extremer Fremdlichteinflüsse von bis zu 80000-90000 lx im Einkanalbetrieb möglich. Besonders bevorzugt wird eine zweistufige Auslegung realisiert, wobei die erste Stufe für Anwendungen bis zu ca. 20000 lx Fremdlichteinfluß ausgelegt ist und die zweite Stufe die Funktion im Bereich von 20000 lx bis 80000-90000 lx noch verbessert.

Bei einer weiteren besonders bevorzugten Ausführungsform ist der Schaltungszusatz von einem vorgegebenen Schwellwert aktivierbar (Anspruch 5). Auf diese Weise wird ein unnötiger Stromverbrauch der Kompensationsschaltung vermieden.

Nach einer weiteren besonders bevorzugten Variante der Erfindung weist die Kompensationsschaltung einen Transistor, eine Spule und einen Widerstand auf, wobei Spule und Widerstand in Reihe zwischen Transistorkollektor und Erde geschaltet sind (siehe Anspruch 6). Bevorzugt ist ferner der Transistorkollektor direkt mit der Infrarotdiode verbunden (siehe Anspruch 7), ein weiterer Widerstand zwischen Transistorkollektor und Transistorbasis vorgesehen (siehe Anspruch 8) und zwischen die wenigstens eine IR-Empfangsdiode und Erde ein Arbeitswiderstand geschaltet, parallel zu dem aus erstem und zweitem Widerstand sowie Spule und Transistor bestehenden Schaltungszusatz (Anspruch 9). Selbstverständlich ist es im Rahmen der Erfindung aber auch möglich, den Schaltungszusatz zu variieren - beispielsweise durch ein Anordnen der Spule L1 und des Widerstands R2 im Kollektorzweig.

Durch den in den Ansprüchen 6 bis 9 angegebenen Schaltungszusatz wird auf unkomplizierte Weise eine besonders effektive Minimierung unerwünschter Störlichteinflüsse realisiert. Die Schaltung (im Sinne einer Zusatzschaltung zur eigentlichen Empfangsschaltung mit Diode, Arbeitswiderstand usw.) variiert dynamisch entsprechend dem Gleichspannungsabfall über dem Arbeitswiderstand nur den Gleichstrom-Lastwiderstand der Infrarot-Dioden, wodurch deren Gleichspannungsarbeitspunkt stabilisiert wird. Die Wechselspannungseigenschaften der IR-Dioden werden aufgrund der Spule nicht bzw. nur unwesentlich verändert.

Bei einer weiteren besonders bevorzugten Variante der Erfindung besteht die zweite Schaltungsstufe aus einer Diode und einem mit der Diode in Reihe geschalteten Widerstand (siehe dazu Anspruch 10). Der zweiten Schaltungsstufe liegt die Idee zu Grunde, den Gleichspannungsabfall über dem Widerstand R2 zu begrenzen. Diese Variante ermöglicht eine Mehrkanalübertragung auch unter besonders extremem Störstrahlungseinfall.

Eine besonders bevorzugte, durch einen vorgebbaren Schwellwert aktivierbare, Variante der Erfindung ist durch einen Spannungsteiler realisierbar, der zur Festlegung des Arbeitspunktes dient (ein zwischen den Widerstand R1 und Erde geschalteter Strombegrenzungswiderstand R3 - siehe Anspruch 11).

Bei dem in Anspruch 12 angegebenen erfindungsgemäßen Verfahren zur Informations-, insbesondere Ton- und/oder Datenübertragung mittels Infrarotstrahlung, wird die Infrarotstrahlung über eine Infrarot-Empfangsdiode empfangen und es werden Störstrahlungseinflüsse mittels eines Schaltungszusatzes minimiert (siehe Anspruch 12).

Die Erfindung ermöglicht zusammengefaßt den Einsatz von Infrarot-Empfängern auch unter schwierigsten Bedingungen. Helle Sonneneinstrahlungen in Häuser, Übertragungen und Empfänge auf Terassen, Seminare in einem Garten stellen kein Problem mehr dar. Es ist sogar eine sichere und gerichtete Datenübertragung im Freien von Gebäude zu Gebäude oder beispielsweise von einer Verkehrsampel zu einem Rechner an einer Straßenecke möglich.

Nachfolgend wird die Erfindung anhand eines Ausführungsbeispieles unter Bezug auf die Zeichnungen näher erläutert. Es zeigt:

Fig. 1    einen entsprechenden Schaltungsauszug eines erfindungsgemäßen Empfängers;

Fig. 2    ein Diagramm, welches einen Vergleich zwischen dem Stand der Technik und Ausführungsbeispielen erfindungsgemäßer Empfänger veranschaulicht;

Fig. 3 ein weiteres Diagramm, welches einen Vergleich zwischen dem Stand der Technik und Ausführungsbeispielen erfindungsgemäßer Empfänger veranschaulicht.

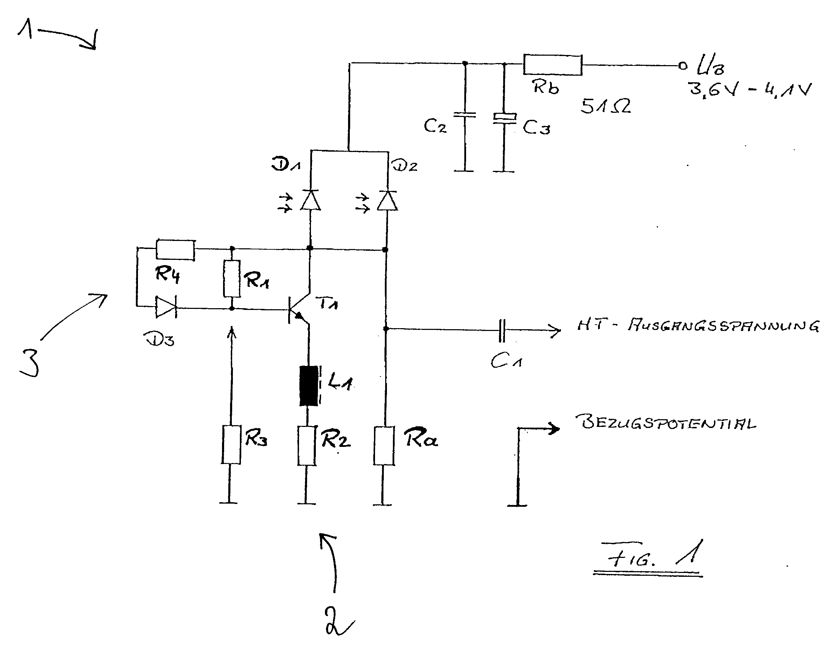

Fig. 1 zeigt als Schaltungsauszug eines erfindungsgemäßen Infrarotstrahlungsempfängers ein IR-Vorverstärker-Eingangsteil 1 (IR-Eingangsschaltung). Die IR-Eingangsschaltung 1 weist zwei parallel geschaltete Empfangsdioden D1, D2 auf, die über einen Arbeitswiderstand Ra an Erde und über einen Widerstand Rb (hier 51Ω) an eine Betriebsspannung Ub (hier 3,6 V) gelegt sind.

Die Infrarotdioden D1 und D2 werden im Diodenbetrieb eingesetzt. In dieser Betriebsart stehen die Dioden D1, D2 unter negativer Vorspannung (welche den Gleichspannungsarbeitspunkt bestimmt), wobei über dem Arbeitswiderstand Ra ein infrarotlichtabhängiger Spannungsabfall proportional zur Sperrstromänderung entsteht. Der Widerstandswert des Arbeitswiderstandes Ra reflektiert einen Kompromiß in Hinsicht auf den gewünschten Wechselspannungs-Arbeitspunkt.

Die Auskopplung der Wechselspannung bzw. Hochfrequenz der Ton- und/oder Datenübertragung erfolgt zwischen dem Arbeitswiderstand Ra und den Empfangsdioden D1,D2 über einen Kondensator C1, dessen erster Anschluß zwischen dem Arbeitswiderstand Ra und den Empfangsdioden D1,D2 liegt. Betriebsspannungsseitig dienen Kondensatoren C2 und C3 (C2: zwischen der Erdspannung und der Verbindung Dioden <-> Widerstand Rb) zur Ausfilterung von Störungen.

Unter starker Kunst- oder Sonnenlichteinstrahlung sind die IR-Empfangsdioden D1, D2 allerdings nicht nur einem modulierten Infrarotstrahlungs-Wechselfeld ausgesetzt, sondern zusätzlich einem weitgehend unmodulierten Infrarotstrahlungs-Gleichfeld mit einer u.U. extremen Intensität. In diesem Fall wird der Sperrichtungsstromfluß in den Dioden D1, D2 so groß, daß deren Innenwiderstand gegen Null geht (und zwar sowohl im Bezug zu der durch Störstrahlung verursachten Gleichspannungsänderung sowie im Bezug zu der durch die Signalübertragung verursachten Wechselspannungsänderungen). Die Dioden D1 und D2 verschieben aufgrund dessen (infolge des sich steigernden Gleichspannungsabfalls über Ra) den optimierten Gleichspannungsarbeitspunkt. Ab einer bestimmten Infrarot-Gleichfeldgröße ist es daher nicht mehr möglich, eine Wechselfeldänderung am Arbeitswiderstand zu erzeugen.

Theoretisch wäre es zwar vorstellbar, diesem Effekt durch eine Verringerung des Arbeitswiderstandes entgegenzuwirken. Ein derartiges Entgegenwirken hat jedoch wiederum eine problematische Wirkung auf die Wechselspannungseigenschaften des Empfängers.

Erfindungsgemäß wird der vorstehend beschriebenen Arbeitspunktverschiebung durch einen Schaltungszusatz 2 aus einem Widerstand R1, einem Transistor T1, einer Spule L1 und einem Widerstand R2 entgegengewirkt.

Die Spule L1 und der Widerstand R2 sind in Reihe zwischen Transistoremitter und Erde geschaltet. Der Transistorkollektor ist direkt mit der Infrarotdiode verbunden. Der Widerstand R1 ist zwischen Transistorkollektor und Transistorbasis geschaltet. Der zwischen die IR-Empfangsdioden D1, D2 und Erde geschaltete Arbeitswiderstand Ra liegt parallel zu der aus den Widerständen R1, R2 sowie Spule L1 und Transistor T1 bestehenden Zusatz- bzw. Kompensations-Schaltung 3.

Die Zusatzschaltung variiert entsprechend dem durch Störstrahlung bewirkten Gleichspannungsabfall über dem Arbeitswiderstand dynamisch den Gleichstrom-Lastwiderstand der IR-Dioden D1, D2. Die Wechselspannungseigenschaften der IR-Dioden ("Ausgangsspannung und Arbeitswiderstand sind im Bezug zur Grenzfrequenz umgekehrt proportional zueinander") werden dabei nicht verändert.

Da die Variation des Gleichstrom-Lastwiderstandes eine höhere Stromaufnahme des Empfängers bedingt, ist die Zusatzschaltung (2) erfindungsgemäß so ausgelegt, daß die Störkompensation erst ab einem bestimmten Gleichspannungswert, der wiederum einen bestimmten Störlichteinfluß darstellt, einsetzt, und zwar am Einsatzpunkt UBE (ohne R3).

Die Zusatzschaltung 2 wird damit erst von starker, die Übertragung beeinträchtigender, Störstrahlung aktiviert. Der Einsatzpunkt ist - wenn gewünscht - durch einen Spannungsteiler vorgebbar (Siehe Widerstand R3).

Die prinzipielle Funktionsweise der Zusatzschaltung 2 ist wie folgt:
Bei einem Anstieg der durch Störstrahlung verursachten Gleichspannung über dem Arbeitswiderstand Ra auf einen Wert

$$U(Ra) - U(R1) - U(XL1) - U(R2) = UBE$$

öffnet der Transistor T1, wobei die Kollektor-Emitterstrecker niederohmiger wird und die Spule L1 sowie der Widerstand R2 parallel zum Widerstand Ra schalten. Die Zusatzschaltung 2 versucht nunmehr, die Spannung auf diesem Wert zu halten. Der frequenzabhängige Widerstand von L1 (XL1) verhindert, daß sich der Wechselspannungswiderstand des Empfängers ebenfalls verringert:

$$(XL1 = 2 \pi F L1, F: = Frequenz).$$

Durch die Anordnung der Spule im Emitterzweig des Transistors ist zusätzlich gewährleistet, daß nur Gleichspannungserhöhungen über Ra ausgeregelt werden.

Der Gleichstrom-Lastwiderstand wird bei voller Öffnung des Transistors T1 minimal (Betrag des Widerstandes R1).

Die vorstehend beschriebene Zusatzschaltung 2 eignet sich insbesondere für Fremdlichtstörungen von bis zu 20000lx - sie regelt den Gleichstromwiderstand von Ra bis R2. Liegt jedoch ab diesem Wert R1 parallel zu Ra, erfolgt bei weiter zunehmender Störstrahlung ein erneuter Spannungsanstieg über dem Arbeitswiderstand Ra.

Dieser Anstieg läßt sich erfindungsgemäß durch eine weitere Schaltungsstufe 3 vermeiden. Die weitere Schaltungsstufe R3 besteht aus einer Diode D3 und einem Widerstand R4, welche parallel zu R1 geschaltet sind. Der Widerstand R4 und die Diode D3 wirken derart mit der Basis-Emmitterdiode des Transistors T1 sowie dem Spulenwiderstand XL1 und dem Widerstand R2 zusammen, daß der Gleichspannungsabfall über dem Widerstand R2 in etwa auf die Flußspannung der Diode D3 und der Basis-Emitterdiode von T1 begrenzt wird. Die stabilisierende Wirkung dieser weiteren Schaltungsstufe endet erst bei extremer Fremdlichteinwirkung von ca. 80000-90000lx. Die Gleichspannung wird auf ca. UF/D3 + UBE/T1 begrenzt.

Optional ist über einen Widerstand R3 zwischen Erde und Transistorbasis eine Strombegrenzung realisierbar.

Zusammengefaßt wird durch die Erfindung eine Infrarot-Signalübertragung auch unter extremem Sörstrahlungseinfluß möglich. Die maximale Fremdlichtgröße ist durch die Betriebsspannung vorwählbar, welche die Aufrechterhaltung des Diodenbetriebes bzw. die Sperrspannung der Dioden D2,D3 garantiert. Ein höherer Stromverbrauch tritt erst ab dem vorgewählten Arbeitsspannungs-Schwellwert auf. Eine damit verbundene etwaige Verkürzung von Akku-Standzeiten wird jedoch durch die Vorteile einer störungsfreien Daten- und/oder Tonübertragung mehr als aufgewogen.

Ergänzend zur Fig. 1 sei folgendes Rechenbeispiel zur Erfindung dargelegt:
Die maximale Beleuchtungsstärke Lmax ergibt sich als:

$$Lmax = (Ub/(Ra+Rb))/(2*70) \text{ nA/lx}$$
mit: Ra = 15 kΩ; Rb = 51Ω;
70 nA/lx: Empfindlichkeit der Dioden;

Damit ergibt sich:

$$Lmax \ 3,6 \ V = (3,6V/15051)/140nA/lx$$
⇒ Lmax bei 3,6 V beträgt ca. 1700 lx und
Lmax bei 4,1 V 1950 lx.

Mit Stufe 1 ist dagegen eine Ausregelung bis

$$Lmax \ 3,6V = (3,6V/102)/140nA/lx$$
⇒ Lmax mit Stufe 1 bei 3,6 V beträgt ca. 25200 lx und
Lmax mit Stufe 1 bei 4,1 V 28700 lx.

Stufe 2 begrenzt nur noch die Spannung über Ra auf ca. Uf(D3) + UBE(T1).

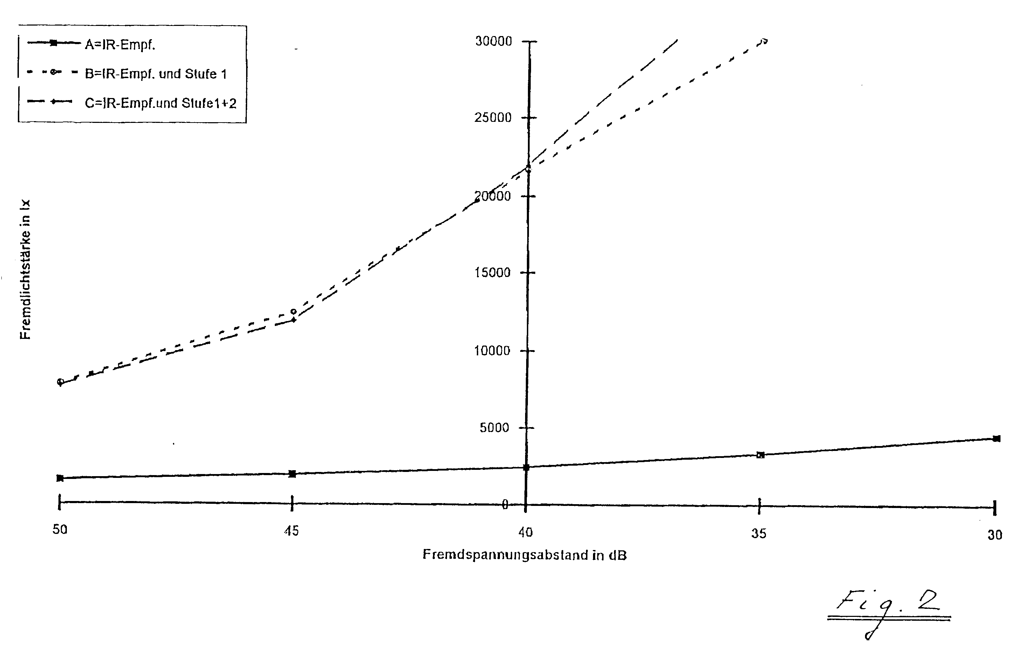

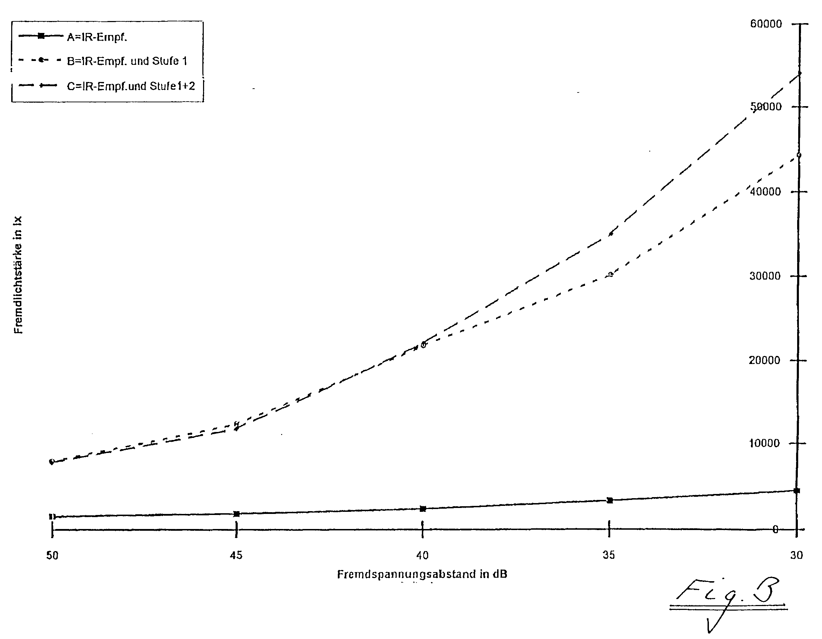

Fig. 2 zeigt einen Vergleich zwischen einem Empfänger nach dem Stand der Technik und Ausführungsbeispielen erfindungsgemäßer Empfänger. Aufgetragen ist die Auflösung bzw. der Trennspannungsabstand S/N (X-Achse, in dB) in Abhängigkeit des Störstrahlungsintensität (Y-Achse, in lx). Die Kurve A ergibt sich bei Einsatz eines Empfängers nach dem Stand der Technik. Die Kurven B und C ergeben sich beim Einsatz eines erfindungsgemäßen Empfängers mit einstufiger Zusatzschaltung (B) sowie einer zweistufigen Zusatzschaltung (C). Gut zu erkennen sind die 40dB Schnittpunkte, die erfindungsgemäß bei 21660 bzw. 21950 dB liegen. Fig. 3 zeigt entsprechend die ausgezeichneten 30 dB-Schnittpunkte, welche bei ca 45000 lx (einstufig) und ca. 55000 lx (zweistufig) liegen!

**Patentansprüche**

1. Infrarotstrahlungsempfänger mit einer IR-Eingangsschaltung (1), die wenigstens eine Infrarot-Empfangsdiode (D1, D2) zum Empfang von Infrarotsignalen zur Informationsübertragung, insbesondere von Ton und/oder Daten, aufweist, gekennzeichnet durch einen Schaltungszusatz (2) zur Minimierung von Störstrahlungseinflüssen bei der Informationsübertragung.

2. Infrarotstrahlungsempfänger nach Anspruch 1, dadurch gekennzeichnet, daß der Schaltungszusatz zur Variation des Gleichstrom-Lastwiderstandes der wenigstens einen IR-Empfangsdiode (D1, D2) in Abhängigkeit der Störstrahlungseinflüsse ausgelegt ist.

3. Infrarotstrahlungsempfänger nach Anspruch 2, dadurch gekennzeichnet, daß der Schaltungszusatz (2) derart ausgelegt ist, daß sie entsprechend dem durch die Störstrahlung bedingten Gleichspannungsabfall über einem Arbeitswiderstand (Ra) den Gleichstomwiderstand der IR-Empfangsdioden (D1, D2) variiert.

4. Infrarotstrahlungsempfänger nach einem der vorstehehnden Ansprüche, dadurch gekennzeichnet, daß der Schaltungszusatz (2) mehrstufig ausgelegt ist.

**5.** Infrarotstrahlungsempfänger nach einem der vorstehenden Ansprüche, dadurch gekennzeichnet, daß die Zusatzschaltung (2) von einem vorgegebenen Schwellwert aktivierbar ist.

**6.** Infrarotstrahlungsempfänger nach einem der vorstehenden Ansprüche, dadurch gekennzeichnet, daß die Zusatzschaltung (2) einen Transistor (T1), eine Spule (L1) und einen Widerstand (R1) aufweist, wobei Spule (L1) und Widerstand (R2) in Reihe zwischen Transistoremitter und Erdspannung geschaltet sind.

**7.** Infrarotstrahlungsempfänger nach Anspruch 6, dadurch gekennzeichnet, daß der Transistorkollektor direkt mit der/den Infrarotdiode(n) (D1, D2) verbunden ist.

**8.** Infrarotstrahlungsempfänger nach Anspruch 6 oder 7, dadurch gekennzeichnet, daß die Zusatzschaltung (2) einen weiteren Widerstand (R1) aufweist, der zwischen Transistorkollektor und Transistorbasis geschaltet ist.

**9.** Infrarotstrahlungsempfänger nach einem der Ansprüche 6 bis 8, dadurch gekennzeichnet, daß zwischen die wenigstens eine IR-Empfangsdiode (D1) und Erde ein Arbeitswiderstand (Ra) geschaltet ist, parallel zu der aus den Widerständen (R1, R2) sowie Spule (L1) und Transistor (T1) bestehenden Zusatzschaltung (2).

**10.** Infrarotstrahlungsempfänger nach einem der Ansprüche 4 bis 10, dadurch gekennzeichnet, daß die weitere Schaltstufe (3) eine weitere in Reihe geschaltete Diode (D3) und einen weiteren Widerstand (R4) aufweist - parallel zum Widerstand (R1).

**11.** Infrarotstrahlungsempfänger nach einem der vorstehenden Ansprüche, gekennzeichnet durch einen Spannungsteiler, der zur Festlegung des Einsatzpunktes dient.

**12.** Verfahren zur Informations-, insbesondere Ton- und/oder Datenübertragung mittels Infrarotstrahlung, bei dem die Infrarotstrahlung über eine Infrarot-Empfangsdiode empfangen wird, dadurch gekennzeichnet, daß Störstrahlungseinflüsse bei der Informationsübertragung mittels einer Zusatzschaltung zur Stabilisierung des Gleichspannungsarbeitspunktes minimiert werden.

**13.** Verfahren nach Anspruch 13, dadurch gekennzeichnet, daß die Minimierung der Störstrahlungseinflüsse durch Variation des Gleichstrom-Lastwiderstandes entsprechend dem durch die Störstrahlung bedingten Gleichspannungsabfall über einem Arbeitswiderstand (Ra) erfolgt.

FIG. 1

Fig. 2

Fremdlichtstärke in lx

60000
50000
40000
30000
20000
10000
0

A=IR-Empf.
B=IR-Empf. und Stufe 1
C=IR-Empf.und Stufe1+2

30    35    40    45    50

Fremdspannungsabstand in dB

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | FR-A-2 669 167 (VALEO NEIMAN) | 1-4,12, 13 | H04B10/06 |
| A | * Zusammenfassung; Abbildungen 1,2 * <br> * Seite 3, Zeile 36 - Seite 4, Zeile 20 * <br> --- | 6,11 | |
| X | DE-A-29 34 965 (HITACHI) | 1-5,12, 13 | |
| A | * Seite 19, letzter Absatz - Seite 20, letzter Absatz; Anspruch 1; Abbildungen 1,5-7 * <br> --- | 6,7,11 | |
| X | DE-A-32 33 728 (LOEWE OPTA) | 1-3,12, 13 | |
| A | * Zusammenfassung; Ansprüche 1,2; Abbildung 1 * <br> --- | 10 | |
| X | PATENT ABSTRACTS OF JAPAN <br> vol. 13, no. 235 (E-766) (3583) 30. Mai 1989 <br> & JP-A-01 041 531 (NEC) | 1-5,12, 13 | |
| A | * Zusammenfassung * <br> --- | 10 | **RECHERCHIERTE SACHGEBIETE (Int.Cl.6)** |
| X | DE-C-33 11 069 (DEUTSCHE THOMSON-BRANDT) | 1,2,12, 13 | H04B |
| A | * Zusammenfassung; Anspruch 1; Abbildung 1 * <br> ----- | 3 | |

Der vorliegende Recherchenbericht wurde für alle Patentansprüche erstellt

| Recherchenort | Abschlußdatum der Recherche | Prüfer |
|---|---|---|
| DEN HAAG | 24. März 1995 | Goudelis, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
    Dokument

EPO FORM 1503 03.82 (P04C03)